# EUROPEAN PATENT APPLICATION

(11) **EP 2 645 688 A1**
(43) Date of publication of application: **02.10.2013**
(21) Application number: 12161762.5
(22) Date of filing: 28.03.2012
(51) Int. Cl.: H04M 3/56, H04N 7/15, H04L 29/06, H04L 12/18

(54) **Conference system**

(71) Applicant: Televic Conference NV, 8870 Izegem (BE)
(72) Inventor: Talloen, Patrick, 8450 Bredene (BE)
(74) Representative: Van Bladel, Marc

(57) **Abstract**

The present invention relates to a delegate unit (1) for use in a conference system comprising a user interface (3), a web browser (5) arranged for accessing and displaying on the user interface web-based multimedia content, a web server (7) arranged for delivering the multimedia content to the web browser (5) and storage means for storing the multimedia content, whereby the web browser and the web server are adapted for communicating with each other.

## Description

### Field of the invention

The present invention is related to the field of multimedia conference systems comprising a central unit and a plurality of delegate units.

### Background of the invention

A multimedia conference system comprises a central unit (CU) (typically one) and many delegate units (DU). A delegate unit contains both a web-based graphical interface and hardware buttons to participate in a conference (e.g. voting, microphone activation, volume control, ...). On the web-based interface, different types of content can be shown like microphone information, voting results, agenda, documents, video's,...

The total number of delegate units in one conference system can amount to more than 2000 for some conference rooms. When conference rooms are coupled to form one virtual conference room, this number can be even higher. Hence, scalability is very important.

During a conference many audio and video streams are transmitted over the network. The remaining bandwidth is used to exchange control data and events between the delegate units and the central control unit. Control data for example comprise microphone activation and audio channel selection signals. Events are e.g. button events, errors, status changes. For example, a button event occurs when a conference participant presses a button on his delegate unit.

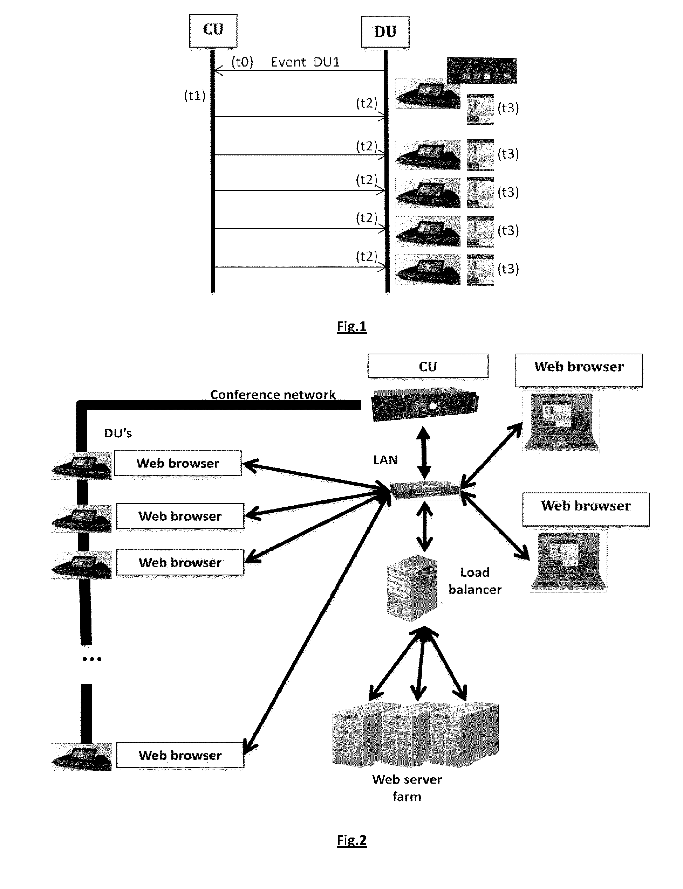

The information exchange must be handled in real-time and in a synchronous way on all the delegate units. The desired way the conference system operates, is illustrated in Fig.1. When a person is pressing a voting button on the touch screen or on the voting panel, a button event is transmitted to the central unit on time to (see Fig.1). The event is processed in the central unit CU on t₁. On t₂ every delegate unit DU must receive the CU response on 'Event DU1'. At time instant t₃ the graphical interface is updated on all delegate units. The shown content (e.g. voting results) must be identical on all delegate units at any time. This also means that the transport layer on the network must be reliable as well.

Large numbers of conference units cannot be supported without changing the hardware configuration of the conference system. A classic browser-based architecture comprises one centralized web server and many web clients. The delegate units are the web clients. The web server is a dedicated server hosting the web server software. The web server exchanges information with the central unit and vice versa. They are working closely together. The number of web clients served by one web server is limited. In order to serve large number of web clients, the number of web servers needs to be incremented. This also requires complex and expensive technology (for performing clustering and load balancing).

The network bandwidth required to serve the web clients becomes inadequate when a certain (large) number of web clients is reached. The web traffic must also coexist with the audio and video streams of the conference system. This introduces network congestion, delays and larger load times on the web clients. An architecture with a huge number of web clients is not scalable and not real-time for this reason. In order to make it scalable additional hardware equipment needs to be provided. Also a software adaptation may be needed. This is not easy to achieve in a conference system; the only solution is to add a LAN next to the conference network.

Fig.2 illustrates a conference system and a classic browser-based architecture. The network branches merge the two architectures together. A web server farm with load balancer is provided to serve large number of browser based clients.

The specific real-time event handling needed in a conference system cannot be obtained with the above architecture. When performing e.g. a parliamentary voting it is essential that data and events be exchanged in a synchronous way to all the web clients in the system. A polling mechanism like Ajax cannot be used, since it is an asynchronous protocol by default (as it concerns a polling technique). A web socket protocol like HTML5 (rfc6455) can be used to obtain real-time behaviour on one web client, but since the HTML5 web socket protocol is not a multicast protocol, the other web clients may not receive data from the server or from other clients in a synchronous way. Obviously, the latency on the network increases as the number of web clients in the network grows.

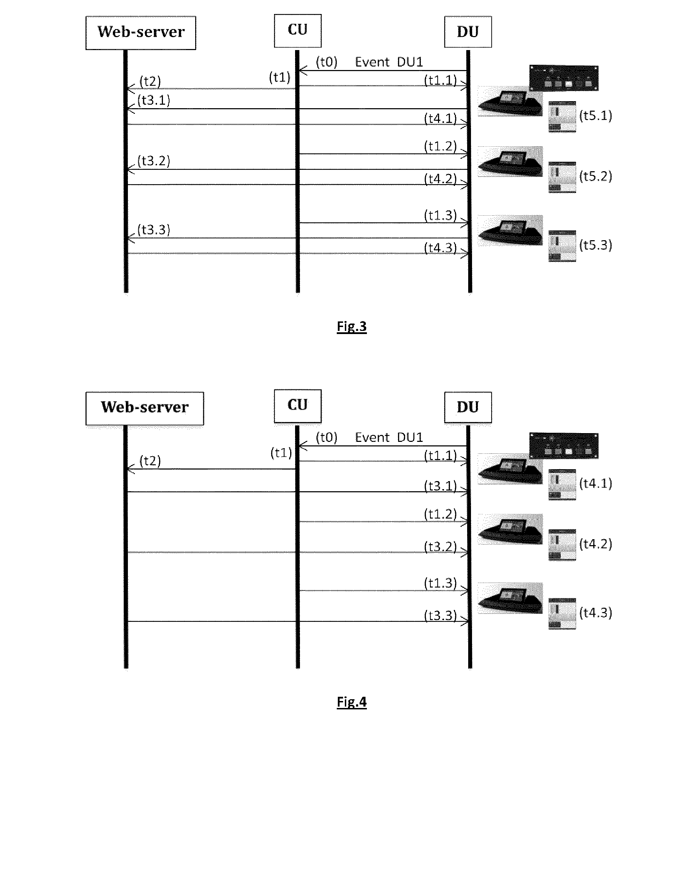

The above-mentioned drawbacks and limitations of the prior art solutions are now illustrated with some examples.
A first practical case is described with reference to Fig.3. When a person is pressing a voting button on the touch screen or on the voting panel of DU1, a button event is transmitted to the central unit CU on time to. The event is processed in the CU on t₁. On t_{1.1} the first delegate unit DU1 receives the CU response on 'Event DU1', on t_{1.2} the second delegate unit receives the CU response on 'Event DU1', on t_{1.3} the third, ... The notation t_{1,x} hereby denotes a time instant immediately after t₁. According to the applied unicast approach the various DUs are addressed one by one.
Short after t_{1.1}, on t₂, the CU also sends a message containing the same content as in the CU response given to the DUs, to the web server to prepare it to answer the Ajax request from the connected browsers. After each reception of the CU response to 'Event 1' at a DU, each browser on that DU sends an Ajax request to the web server to receive the updated content. (t_{3.1}, t_{3.2}, ...).

The web server responds to each request from each connected browser on time instants t_{4.1}, t_{4.2},... The browser get effectively updated one by one on instants t_{5.1}, t_{5.2}, ...

The time elapsed between to (time instant of the button event) and t_{5.x} (time instant that the last DU is updated) increases with the total number of delegate units in the network. The network traffic is increasing with the total number of DUs. Hence, this solution is not real-time and not scalable.

Also in the scenario illustrated in Fig.4 a conference participant presses a voting button on the touch screen or voting panel, so that a button event is transmitted to the central unit on time instant to. The event is processed in the CU on t₁. On t_{1.1} the first delegate unit DU receives the CU response on 'Event DU1', on t_{1.2} the second DU receives the CU response on 'Event DU1', on t_{1.3} the third, ... Again, the notation t_{1,x} denotes a time instant immediately after t₁. Also here a unicast protocol is applied.
Short after t_{1.1}, on t₂, the CU also sends a response message to the web server to make it ready to update the connected browsers.
The web server sends an update command to each connected browser on instants t_{3.1}, t_{3.2},... Each browser gets updated in turn on instants t_{4.1}, t_{4.2}, ... , respectively.
The time elapsed between to (time instant of the button event) and t_{4.x} (time instant that the last DU is updated) is increasing with the total number of delegate units in the network. The network traffic is also increasing with the total number of DUs. So this solution is still not real-time and non scalable.

These examples clearly illustrate the need for a conference system with a scalable web-based architecture that allows for real-time operation.

### Summary of the invention

It is an object of embodiments of the present invention to provide for a solution that overcomes the above-mentioned drawbacks of the prior art solutions and that offers a scalable solution capable of real-time operation.

The above objective is accomplished by a delegate unit, controller and conference system according to the present invention.

In a first aspect the invention relates to a delegate unit for use in a conference system. The delegate unit comprises a user interface, a web browser arranged for accessing and displaying on the user interface web-based multimedia content, a web server arranged for delivering the multimedia content to the web browser and storage means for storing the multimedia content, whereby the web browser and the web server are adapted for communicating with each other.

With a delegate unit according to the present invention a scalable conference system can indeed be obtained. In the proposed solution the web based architecture is located on the delegate unit. A web server is provided in the delegate unit to deliver the multimedia content to the web browser. The multimedia content can be stored in the delegate unit. A web browser can access the content and display it on the user interface. The multimedia content may be documents (e.g. in pdf, odf, ppt, ... format), audio files, video files etc.

Most preferably the delegate unit is further arranged for exchanging communication with a central unit of the conference system, whereby that communication comprises control data. The control data for example comprise microphone activation and audio channel selection signals. Obviously, not only control data are exchanged between central unit and the delegate units.

In a preferred embodiment the web browser and the web server are adapted for communicating according to a web socket protocol.

Advantageously, the communication between web browser and web server is performed over a bidirectional full duplex communication channel. The web socket protocol is in a preferred embodiment a HTML5 web socket protocol.

The communication between web browser and web server is typically performed over a single TCP socket.

In a second aspect the invention relates to a controller device for use in a conference system. The controller is arranged for controlling a plurality of delegate units of the conference system, for delivering multimedia content to said plurality of delegate units and for managing the flow of the multimedia content to the plurality of delegate units.

The proposed controller means is adapted for interacting with the delegate units. It controls the conference participant units. It further takes care of providing the multimedia content to those units (to be more precise, to the web server in the unit). The controller manages the multimedia content flow, in the sense that it makes sure the multimedia content is transferred in a scalable and reliable way from the central unit to delegate units.

In an advantageous embodiment the controller as described is integrated in a central unit of the conference system.

In a further aspect the invention relates to a conference system comprising a plurality of delegate units as previously described, a central unit and a controller as mentioned. Optionally the controller is integrated in the central unit. Advantageously, the controller is integrated in the central unit.

In a preferred embodiment the controller and the plurality of delegate units are arranged for communicating with each other according to a multicast protocol that allows for detection and retransmission of lost data packets.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:

Fig.1 illustrates the desired reaction of a conference system to a button event launched by a conference participant's delegate unit.

Fig.2 represents a browser-based architecture as known in the art.

Fig.3 illustrates a first example of the limitation of prior art solutions.

Fig.4 illustrates a second example of the limitation of prior art solutions.

Fig.5 illustrates an embodiment of the present invention.

Fig.6 illustrates the approach of the present invention, expressed in a client-server context.

Fig.7 illustrates a reliable transport layer protocol for conference data broadcasting.

Fig.8 illustrates the operation of a conference system according to an embodiment of the invention.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

In the present invention a scalable, a real-time web approach is applied wherein the web architecture is moved to the individual delegate unit (DU) by embedding a web server and a web browser on each DU. A central web server is thus no longer needed. Another advantage of the proposed solution is that because of the local storage, no web traffic related to conference data will pass through the network. Web traffic from the internet still passes through the network, but is controlled by providing less bandwidth and assigning a lower QoS (quality of service) to this type of traffic. In order to allow for high-speed internet surfing, the conference network hardware is modified. However, this falls out of the scope of the present invention.

A web server in the delegate unit helps to deliver content that can be accessed via the local storage. An alternative could be to access the content via the intranet. However, in that case one is again faced with the problem of lack of scalability. A web browser is used to access information provided by a web server. Preferably the web browser and the web server communicate with each other according to a web socket protocol. A web socket is a web technology providing for bidirectional, full-duplex communication channels, typically over a single Transmission Control Protocol (TCP) socket.

The present invention also discloses a controller device for controlling the delegate units of the conference system. In a most preferred embodiment the controller is comprised in the central unit of the conference system. However, in one embodiment the controller constitutes a separate device, which together with the delegate units and the central unit makes up the main building blocks of the conference system. The main tasks to be performed by the controller relate to the control of the delegate units and management of the multimedia content flow to the various delegate units. In the rest of this description, it is assumed that the controller is comprised in the central unit.

The web pages and content (files) that need to be displayed during the conference on the delegate unit's browser, are moved from the central web server (as in the prior art) to the central unit CU and to each DU's local storage. A multicast storage synchronization protocol is added to the CU and the delegate units to transfer the content in a scalable way from the CU to DUs. By using a multicast protocol, the central unit needs to transmit the content only once. The delegate units receive the content at the same time. The number of delegate units in the conference system does not matter anymore : the proposed solution can be scaled from a small system to a system with several thousands of delegate units. The synchronization process takes place before or during a conference. Preferably this is done before the meeting, as this process may take some time to complete. Possibly lost frames are retransmitted during the transfer process.

In order to ensure the communication between the web server and the web browser a HTML5 web socket protocol (rfc6455) is implemented between the web browser and the embedded web socket server on the delegate unit. In this way the data between the browser and the web socket server can be exchanged in a real-time way, and vice versa. It is not needed to use a polling mechanism like Ajax.

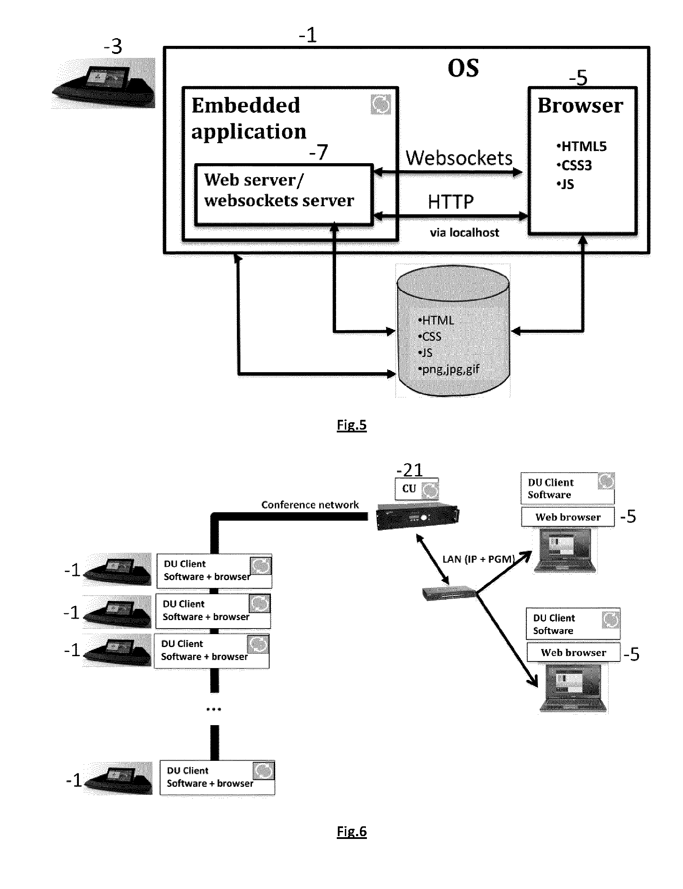

Fig.5 represents a delegate unit according to an embodiment of this invention. The web server and the web socket server are embedded in an embedded application. They are linked together. They are not running next to the embedded application, rather they are part of the embedded application. Opting for an embedded application yields several additional benefits, e.g. a small RAM footprint, minimal CPU utilization, the cross compilation for multiple CPU and operating system combination, etc. The delegate unit comprises a browser (5) and a web server (7). The communication between those two parts occurs in a most preferred embodiment via a web socket protocol. The browser is also communicating with the web server using http.

The delegate units are also the clients in a client-server architecture where the control unit CU performs the server role. The CU and the delegate units are exchanging conference information (e.g. voting button events, voting results, microphone events, ...). In a preferred embodiment of the invention a custom reliable transport layer is used to make everything real-time and scalable. Fig.6 provides an illustration of the delegate units expressed in a client-server context. A first branch shows the delegate units attached to the conference network, a second branch shows pc based delegate units in a LAN environment.

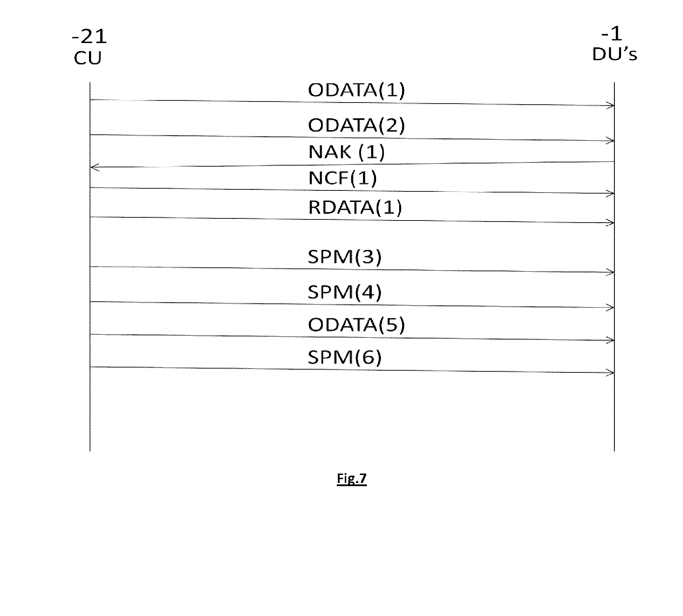

A reliable transport layer for broadcasting conference data between the central unit CU and the delegate units (DUs) is presented as an example (see Fig.7). The basic reliable broadcast protocol (RBP) architecture comprises a broadcasting content source (CU) and one or more receivers (DUs). The CU sends sequenced content in sessions to DUs, using a broadcast protocol. The delegate units listen to broadcast original data (*ODATA*), detect missing content through the sequence numbers and send unicast negative acknowledgments (*NAKs*) back to the CU. *NAKs* are answered by broadcast *NAK confirmations* (*NCFs*), which suppress any *NAKs* from DUs. The CU sends broadcast repair data (*RDATA*) to DUs containing the missing content. The CU must maintain a sliding window of retransmittable information. Delegate units never need to communicate with the central unit CU unless they request repair data with a negative acknowledgment. However, this means that the CU determines the window size for each DU. The absence of positive DU-to-CU acknowledgments also means that the proposed RBP scales well and cuts down on control message traffic that can easily overwhelm the network. The DUs can start receiving a RBP session from the CU at any time and request any missing previous information that the receiving application needs. If the session is long enough or the transmit window small enough so that the central unit CU does not maintain a long session history, the receiver cannot get all required information.
The CU generates sequenced packets of *ODATA* that are broadcast to the DUs. Interleaved with the content packets are source path messages (*SPMs*), which tell the DUs about their upstream RBP source. *ODATA* packets and *SPMs* are broadcast from the CU. The CU acknowledges a received *NAK* by broadcasting an *NCF* downstream to the DU. *NCFs* make sure that RBP receivers do not bombard sources with *NAKs.* The CU also responds to *NAKs* by broadcasting *RDATA* packets with the same sequence number as the one indicated by the *NAK.*
The DUs accept all types of downstream RBP messages: *ODATA, SPMs, NCFs,* and *RDATA.* The DUs process the *ODATA* packets as they arrive from the CU, constantly checking the 32-bit sequence number in the *ODATA* RBP header for gaps in the sequence. If the DU detects missing information, it generates a *NAK* for that sequence number. The *NAK* is unicast upstream to the CU. A DU knows that its NAK was received by the CU when it gets an *NCF* in response to its *NAK.* If several DUs are missing the same *ODATA* packet, DUs getting an *NCF* for the packet before sending a NAK suppress the *NAK.* If a DU does not get an *NCF* in response to a *NAK,* the DU application can send a *NAK* again or continue, with the certainty that information is missing. After the *NCF,* DUs get an *RDATA* packet with the same sequence number indicated in the *NAK* and a copy of the missing *ODATA.* The delegate unit now has complete information or knows for certain what information is missing.

Various alternative implementations of reliable transport protocols can be envisaged, as the skilled person will readily appreciate. For example, instead of using a negative acknowledgement, a positive acknowledgement could be used. The DU then explicitly notifies the sender (CU) which messages or packets were received correctly, which may implicitly inform the sender which packets were not received even though they were sent and thus may need to be retransmitted.

The proposed solution can also be applied in a LAN environment (see Fig. 6) by just replacing the custom transport layer with a reliable multicast protocol (rfc3802).

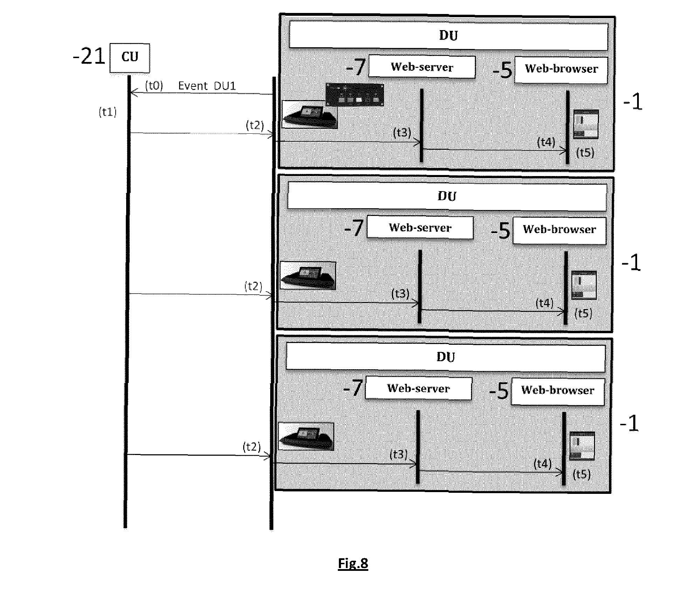

Fig.8 shows a typical use case of a conference system as in the present invention. When a conference participant presses a voting button on the touch screen or on the voting panel, a button event is transmitted to the CU on time instant to. The event is processed in the CU on t₁. On t₂ all the DUs receive the CU response on 'Event DU1'. On instant t₃ the response is given to the DUs web socket server. The web socket server in each DU transfers the response over the local host to the local web-browser (t₄). On t₅ every browser is updated. The proposed solution is indeed scalable, real-time and web-based.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Delegate unit (1) for use in a conference system comprising a user interface (3), a web browser (5) arranged for accessing and displaying on said user interface web-based multimedia content, a web server (7) arranged for delivering said multimedia content to said web browser (5) and storage means for storing said multimedia content, whereby said web browser and said web server are adapted for communicating with each other.

2. Delegate unit (1) as in claim 1, further arranged for exchanging communication with a central unit (21) of said conference system, said communication comprising control data.

3. Delegate unit (1) as in claim 1 or 2, wherein said web browser and said web server are adapted for communicating according to a web socket protocol.

4. Delegate unit (1) as in any of the previous claims, wherein said web browser and said web server are adapted for communicating over a bidirectional full duplex communication channel.

5. Delegate unit (1) as in claim 3 or 4, wherein said web socket protocol is a HTML5 web socket protocol.

6. Delegate unit (1) as in any of claims 3 to 5, wherein said web browser and said web server are adapted for communicating over a single TCP socket.

7. Controller means (11) for use in a conference system arranged for controlling a plurality of delegate units, for delivering multimedia content to said plurality of delegate units and for managing the flow of said multimedia content to said plurality of delegate units.

8. Central unit (21) comprising a controller means as in claim 7.

9. Conference system comprising a plurality of delegate units (1) as in any of claims 1 to 6, a central unit (21) and a controller as in claim 7.

10. Conference system as in claim 9, wherein said controller and said plurality of delegate units are arranged for communicating with each other according to a multicast protocol that allows for detection and retransmission of lost data packets.
